# EUROPEAN PATENT SPECIFICATION

(11) **EP 0 541 173 B1**
(45) Date of publication and mention of the grant of the patent: **06.03.1996**
(21) Application number: 92203379.0
(22) Date of filing: 03.11.1992
(51) Int. Cl.: A01D 45/02

(54) **A maize chopper**
Maishäcksler
Hacheuse de mais

(30) Priority: 05.11.1991 NL 9101845
(43) Date of publication of application: 12.05.1993
(73) Proprietor: Greenland Geldrop B.V., NL-5667 KP Geldrop (NL)
(72) Inventor: van Amstel, Leonardus Hendricus Maria, NL-6556 PK Geldrop (NL)
(74) Representative: Vollebregt, Cornelis Jacobus, Ir.

(56) References cited:
- EP-A- 0 099 527
- EP-A- 0 253 125
- DE-A- 2 143 949
- DE-A- 3 623 380
- DE-A- 4 002 344
- FR-A- 2 361 809
- FR-A- 2 402 394
- GB-A- 2 012 153
- GB-A- 2 012 154
- US-A- 4 143 504

## Description

The invention relates to an additional device for use with a maize chopper having main cutting means, which are rotatable journalled in the frame about upwardly extending axes of rotation, and with feed members disposed above the main cutting means and rotating along with said main cutting means during operation, said feed members being provided with carriers for transporting the crop in the direction of a chopping chamber containing a chopper mechanism for chopping the fed-in crop.

From GB-A-2012153 there are known maize choppers designed for harvesting two or more rows of stalked plants, such as maize stalks, which are cut by the cutting means and chopped by means of the chopping mechanism.

In practice there is a need to provide a possibility, proceeding from such a basis design of a maize chopper, to harvest more rows of crop arranged one beside the other simultaneously than the number of rows for which the machine was originally designed.

According the invention this can be achieved by means of an additional device having two co-operating cutting means, both of which are couplable to the main cutting means by a chain, a carrier wheel being provided above the auxiliary means adapted for location closest to a cutting means of the maize chopper, the carrier wheel having fingers for driving engagement by the chain and recesses therebetween for receiving crop stalks.

When using the construction according to the invention, taking a maize chopper which in use is suitable for cutting and chopping one or more rows of crop in one operation as a starting point, it is easily possible, by adding the additional device, to obtain a maize chopper which is suitable for simultaneously cutting and chopping extra rows of crop stalks. It will be apparent that in the first place this offers advantages from a manufacturing point of view, since it is possible, taking a single basic type of maize chopper as a starting point, to supply maize choppers with varying capacities, whilst this is also advantageous for the buyer, since he will likewise have a possibility of changing the capacity of the maize chopper he purchases at a later date, should he wish to, either to a maize chopper for processing lesser rows or to a maize chopper for processing more rows.

The device is furthermore particularly suited for harvesting randomly planted crops. In this respect it will be advantegeous when the auxiliary cutting means are adjustable transversely to the intended direction of movement of the maize chopper, and capable of being arranged closely together.

It is noted that from German patent application no. 3.623.380 a maize chopper is known which is provided with a cutter bar extending transversely to the intended direction of movement during operation. Two conveying means are arranged behind said cutting bar, each comprising a pair of drums and a conveyor chain passed over said drums for transporting the cut-off stalks around said drums to the chopping mechanism.

From said reference it also can not be derived, however, that it is possible to extend the capacity of a maize chopper by adding an additional device and accordingly the construction of said known maize chopper is entirely different from that of a maize chopper equipped with an additional device according to the invention.

Further the invention relates also to a maize chopper in combination with an additional device as claimed in claim 1.

The invention will be explained in more detail hereafter with reference to a few possible embodiments of the construction according to the invention diagrammatically illustrated in the accompanying figures.

Figure 1 is a diagrammatic view of an embodiment according to the invention.

Figure 2 is a diagrammatic view of the machine shown in figure 1, in a second operating position.

Figure 3 is a larger-scale plan view of a pair of auxiliary cutting means and a chain co-operating therewith.

Figure 4 is a sectional view of a carrier wheel located above an auxiliary cutting means, the chain co-operating therewith and guide means for said chain.

Figure 5 is a plan view of a part of the chain shown in Figure 4.

Figure 6 is a side view of Figure 5.

Figure 7 is a diagrammatic plan view of a second embodiment of a device according to the invention.

Figure 8 is a plan view corresponding with Figure 7, wherein the maize chopper is shown in another operating position.

Figure 9 is a diagrammatic plan view of a further embodiment of an add-on device according to the invention.

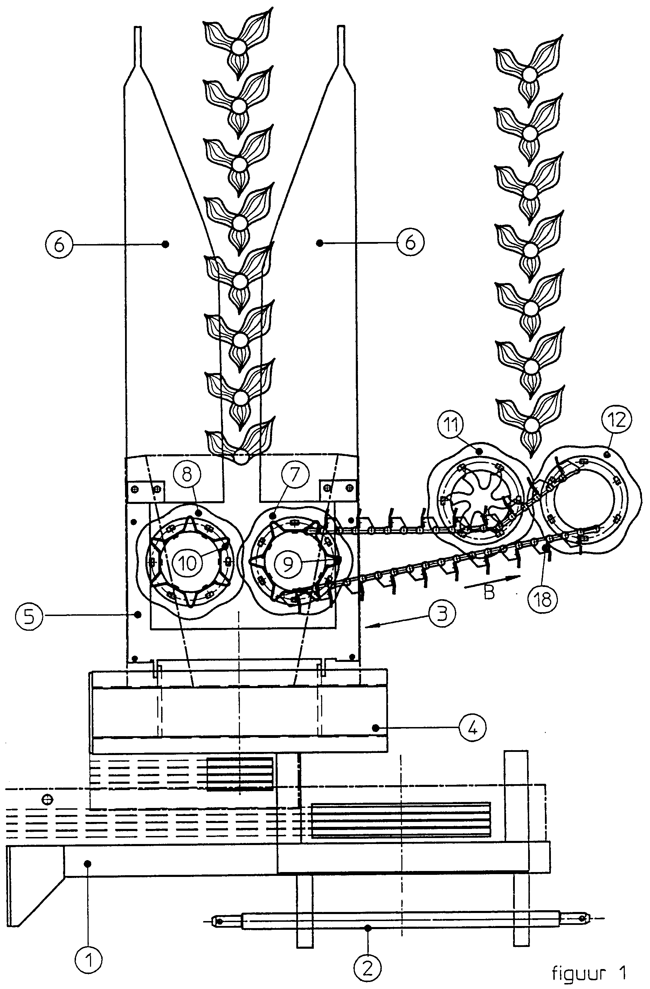

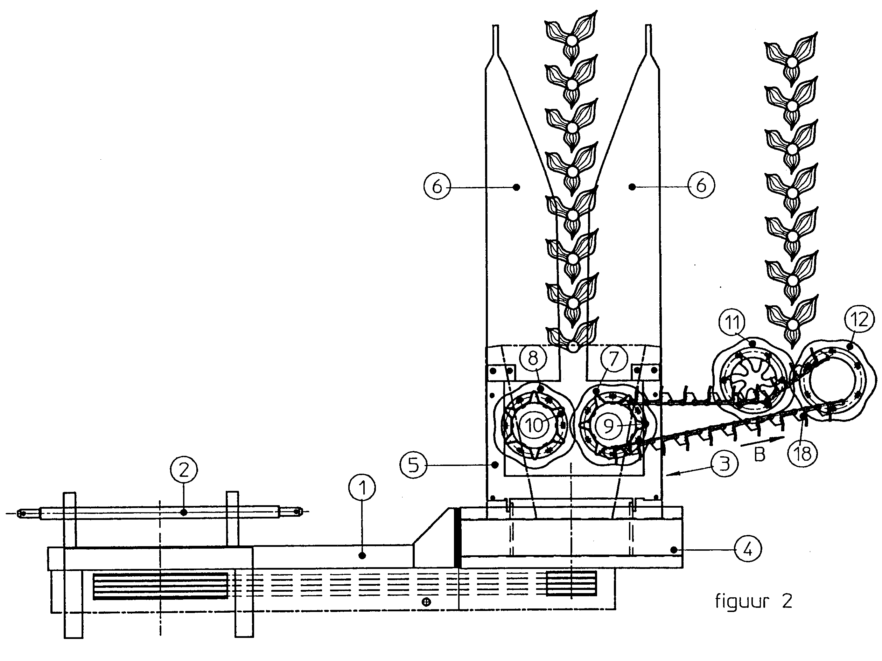

The maize chopper diagrammatically shown in Figures 1 and 2 comprises a first frame part 1, which is provided with a coupling member 2, by means of which the maize chopper can be coupled to the power lift of a tractor or the like in the usual manner.

The frame part 1 is coupled to a further frame part 3, so as to be pivotable about a vertically extending pivot axis (not shown), said frame part 3 comprising a casing 4, in which a chopping wheel is accommodated in a usual manner. Furthermore the frame part 3 comprises a frame 5 coupled to the casing 4. Crop guides 6 are secured to the side of the frame 5 remote from the casing 4.

Furthermore the frame 5 supports two co-operating disc-shaped main cutting means 7 and 8, above which drum-shaped feed members 9 and 10 are located, said feed members being provided with projecting ribs forming carriers, as will be apparent from Figures 1 and 2.

During normal operation the frame parts 1 and 3 will occupy the position shown in Figure 2, wherein the device can be moved across the field, in the direction according to the arrow A, by means of a tractor or the like, in order to cut off maize stalks present on the field by way of the main cutting means 7 and 8, whereupon said stalks are moved towards the rear by means of the feed members 9 and 10, in the direction of a feed opening provided in the casing 4. The maize stalks or the like introduced into the casing in this manner are chopped by the chopping wheel and discharged in a usual way into a trailer driving along the chopper.

For transport behind the tractor the two frame parts 1 and 3 can be brought into the position shown in Figure 1 with respect to each other.

The construction and the operation of such a maize chopper provided with two main cutting means and drum-shaped feed members located thereabove is generally known, accordingly it will not be necessary to describe or illustrate the construction of this known maize chopper in more detail herein.

In practice, however, there is frequently a need to extend the working width of such a standard maize chopper, so that several rows of crop can be simultaneously cut and chopped in one operation.

According to the invention this can be achieved in that use is made of at least two additional disc-shaped auxiliary cutting means 11 and 12, which are supported on a frame beam (not shown) so as to be rotatable about vertical axes of rotation, said frame beam preferably being detachably secured to the side of the frame 5.

A chain wheel 13, which is fixedly connected to the auxiliary cutting means 12, is located above the auxiliary cutting means 12 located furthest away from the two main cutting means 7 and 8.

A chain wheel 14, which is connected to the auxiliary cutting means 11, is located above the auxiliary cutting means 11 located closest to the two main cutting means 7 and 8.

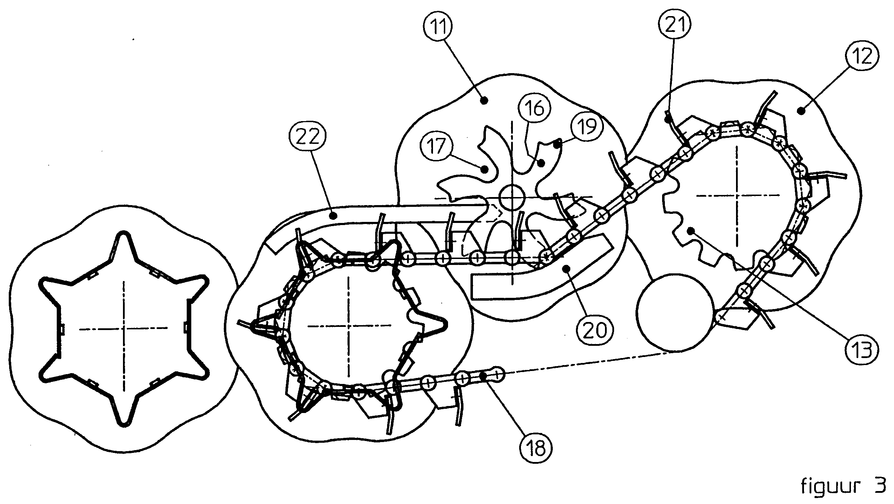

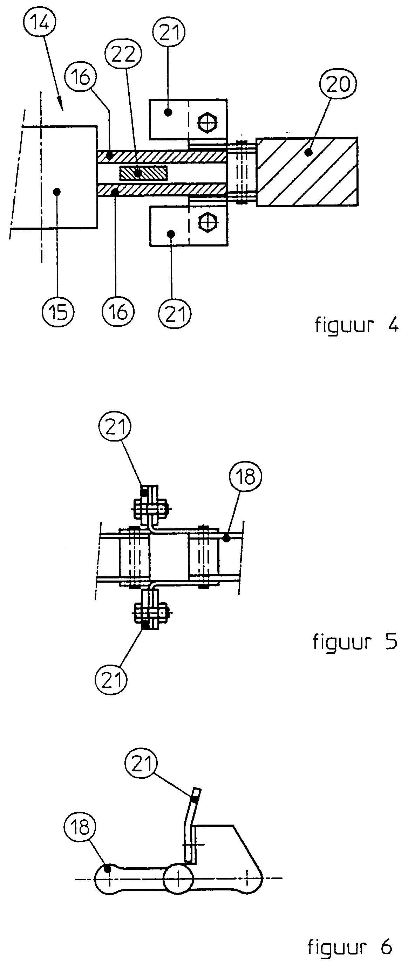

As appears from Figures 3 and 4 said chain wheel 14 is built up of a hub part 15 and two superimposed plate-shaped members connected thereto, which are each built up of a plurality of fingers 16 being integral with each other and extending outwards from the hub-shaped member 15, said fingers bounding recesses 17 located therebetween and being open at the outer circumference of the chain wheel in question.

Above said main cutting means 7 a chain wheel is provided, said chain wheel being located between the main cutting means 7 and the feed member 9 provided above said cutting means and being connected to the main cutting means 7. An endless link chain 18 is passed over the chain wheels that are connected to the cutting means 7 and 12, said link chain also being passed along the rear side of the chain wheel 14 connected to the auxiliary cutting means 11, seen in the intended direction of movement according to the arrow A. The chain rollers thereby co-operate with projecting noses 19 provided on the ends of the fingers 16, as will be apparent from Figure 3. As is furthermore apparent from Figure 3, guide means 20 for the chain 18, extending along part of the circumference of the chain wheel 14, is provided near the chain wheel 14, said guide means ensuring that the pins of the chain 18 remain engaged with the projecting noses 19, so as to prevent undesirable slipping of the chain over the noses 19 of the chain wheel 14, as a result of which the intended timing of the drive of the fingers 16 functioning as carriers for the crop stalks would be lost.

As will furthermore be apparent from the Figures wings 21, extending above and under the chain, are secured to the links of the chain in regularly spaced-apart relationship.

A guide strip 22 is provided for the part of the chain 18 which extends between the rear side of the chain wheel 14 and the front side of the feed member 9 located above the main cutting means 7. As will furthermore be apparent from Figure 3 the end of the guide strip 22 located near the chain wheel 14 is positioned between the plate-shaped parts comprising the fingers 16, whilst the parts of the wings 21 remote from the chain are located above and under the guide strip 22 respectively.

When using a device equipped with the additional device comprising the auxiliary cutting means 11 and 12 it is possible that besides the row of crop stalks cut off by the main cutting means 7 and 8 also a further row of crop stalks is cut by way of said auxiliary cutting means 11 and 12. The cut-off stalks are carried along by the chain 18 moving in the direction according to the arrow B, in particular by the wings 21 secured to said chain, in the direction of the chain wheel 14, whereby the stalks will be carried along by said chain wheel acting as a carrier wheel, in the interspaces between the fingers 16. As will be apparent from Figure 3 the adjustment between the chain wheel 14 and the chain 18 is such, that at the time of the passage of the chain wheel 14 the wings 21 secured to the chain 18 are at least substantially positioned above the fingers 16 of the chain wheel, so that the cut-off crop stalks can be received in the recesses 17 without impediment.

Then the stalks are passed between the chain and the guide strip 22 and about part of the feed member 9, in the direction of the passage present between the feed members 9 and 10, so as to be passed, together with the stalks cut off by the main cutting means 7 and 8, in the direction of the casing 4 comprising the chopping mechanism.

Since the end of the guide strip 22 is located between the superimposed fingers 16, crop stalks received in the recesses 17, which might tend to become wedged in the recesses 17, will be forced from the recesses.

From the above it will be apparent that the working width of the maize chopper can be doubled by making use of a simple additional device, which is to be attached to the side of the device.

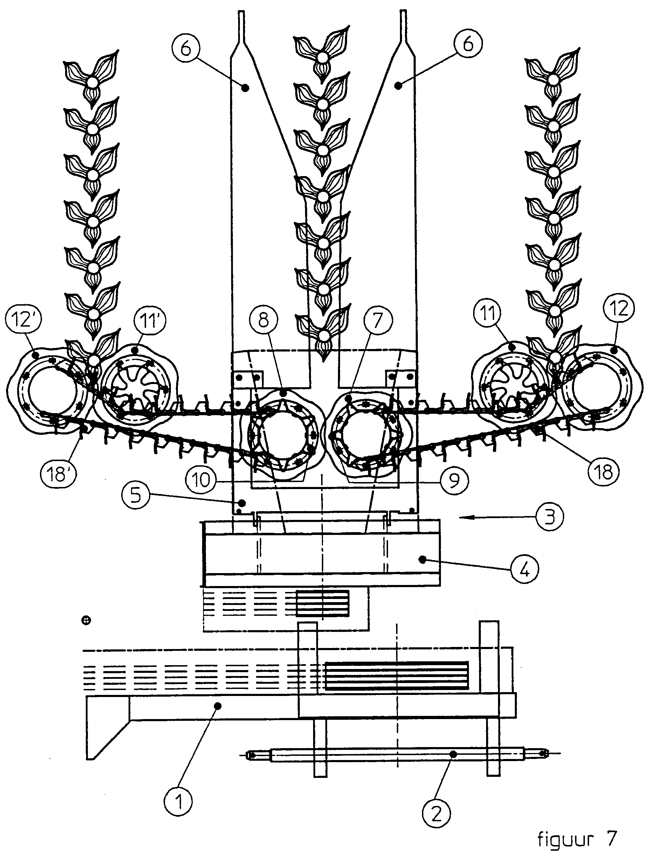

As is diagrammatically shown in Figure 7 additional devices may be attached to either side of the standard maize chopper, if desired, said additional devices being provided with auxiliary cutting means 11, 12 and 11', 12' respectively and with the further associated means required for the correct operation of the respective additional devices, whereby the construction and operation of said means will be apparent from the above description of the first embodiment.

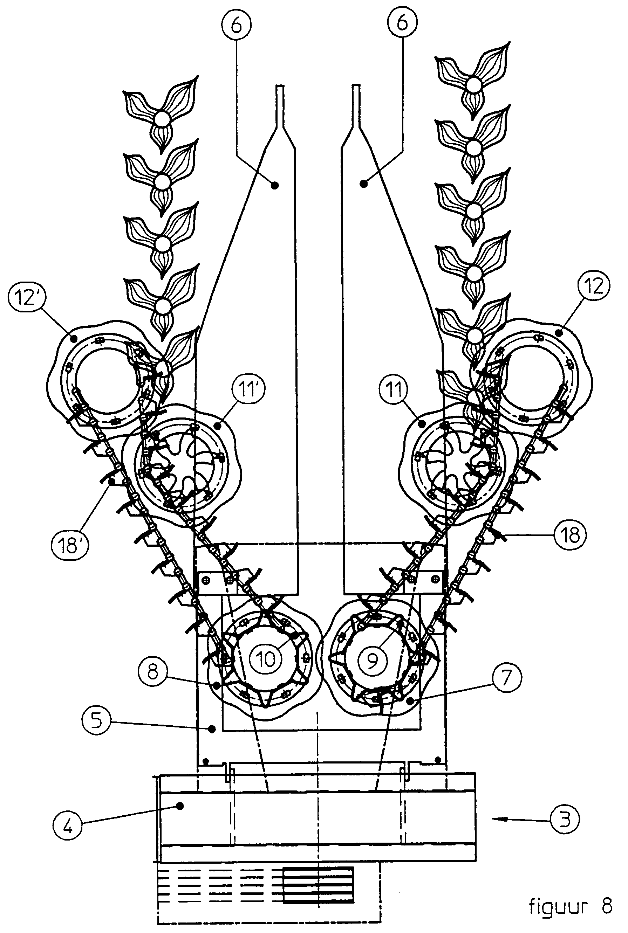

As is furthermore illustrated in Figure 8 the construction may be such that an additional device is adjustable transversely to the intended direction of movement, preferably being pivotable about the axis of rotation of a respective main cutting means 7 or 8, which allows further applications of the device, as will be apparent from Figures 7 and 8.

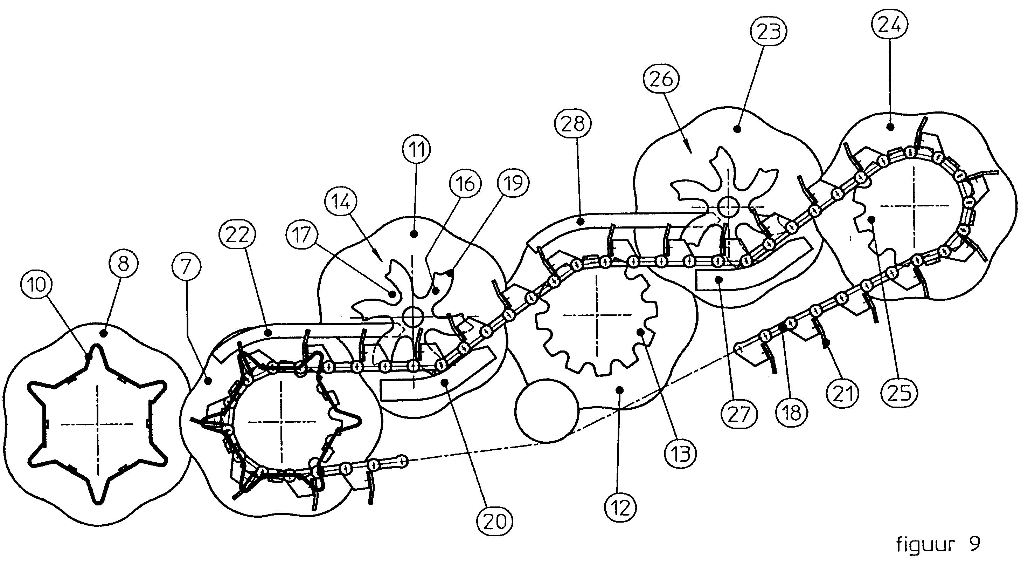

As will furthermore be apparent from Figure 9 the additional unit may comprise further auxiliary cutting means in addition to the auxiliary cutting means 11 and 12, such as the concerting auxiliary cutting means 23 and 24 arranged beside the auxiliary cutting means 11 and 12, seen in the direction of movement, for cutting off a further row of crop. The chain 18 is also passed about a chain wheel 25 thereby, in the manner shown in Figure 9, said chain wheel being connected to the auxiliary cutting means 24 and corresponding with the chain wheel 13, as well as about a chain wheel or carrier wheel 26 connected to the auxiliary cutting means 23 and corresponding with the chain wheel 14. A guide means 27 corresponding with the guide member 20 is arranged near the chain wheel 26, whilst a guide strip 28 corresponding with the guide strip 22 is provided near the cutting means 23 and 12. It will be apparent that also in this embodiment the crop stalks cut off by the two groups of auxiliary cutting means will be transported by the chain 18 in the direction of the two main cutting means 7 and 8, from where they will be transported towards the rear between the two drum-shaped feed members 9 and 10, in the direction of the chopping mechanism.

Furthermore it will be possible to arrange crop guide means in front of the auxiliary cutting means, if desired, in order to achieve that the crop stalks, in case they are not arranged in rows, can still be effectively guided in the direction of the co-operating parts of the auxiliary cutting means arranged side by side.

In the above description of the invention a certain basic type equipped with two main cutting means was taken as a starting point. It will be apparent, however, that the principle of the invention may also be used with basic types having a larger working width and possibly being equipped with more than two main cutting means.

## Claims

1. A maize chopper provided with a frame (1-3), with at least two co-operating main cutting means (7, 8), which are rotatably journalled in the frame about upwardly extending axes of rotation, and with feed members (9, 10) disposed above the main cutting means (7, 8) and rotating along with said main cutting means (7, 8) during operation, said feed members (9, 10) being provided with carriers for transporting the crop in the direction of a chopping chamber (4) containing a chopping mechanism for chopping the fed-in crop, wherein at at least one side the device is equipped with an additional device, which is provided with two additional co-operating auxiliary cutting means (11, 12), one of which is coupled to one of the main cutting means (7) by a chain (18), characterized in that
(a) a carrier wheel (14) is provided above the auxiliary cutting means (11) located closest to the main cutting means (7, 8), the carrier wheel (14) having fingers (16) and recesses (17) therebetween for receiving crop stalks;
(b) the chain (18) is provided with carriers (21); and
(c) the other of the auxiliary cutting means (11, 12) is also coupled to one of the main cutting means (7) by the chain (18), the arrangement being such that the chain (18) engages the fingers (16) and thereby drives the carrier wheel (14), crop cut by the auxiliary cutting means (11, 12) during operation being transported by the chain (18) along the rear side of the carrier wheel (14) and introduced into the space between the feed members (9, 10) located above the main cutting means (7, 8), so as to be fed to the chopping mechanism (4).

2. A maize chopper according to claim 1, characterized in that said carrier wheel (14) is provided with two spaced-apart, superimposed plate-shaped parts comprising protruding fingers (16) and recesses located between said fingers (17).

3. A maize chopper according to claim 1 or 2, characterized in that a strickle means (22) is provided near the place where during operation the chain (18) moves in a direction remote from the carrier wheel (14).

4. A maize chopper according to claims 2 and 3, characterized in that one end of the strickle means (22) is located between the plate-shaped parts (16) of the carrier wheel (14).

5. A maize chopper according to claim 3 or 4, characterized in that said strickle means is formed by the end of a guide means (22) located between the plate-shaped parts (16), said guide means (22) extending at least substantially parallel to the chain (18).

6. A maize chopper according to claim 5, characterized in that the end of the guide means (22) remote from the carrier wheel (14) extends along part of the circumference of a feed member (9) located above a main cutting means (7).

7. A maize chopper according to any one of the preceding claims, characterized in that a guide means (20) for the chain (18) is provided near the carrier wheel (14), at the side of the chain (18) remote from said carrier wheel (14), so as to keep the chain (18) engaged with the carrier wheel (14).

8. A maize chopper according to any one of the preceding claims, characterized in that said chain (18) is provided with protruding wings (21) for carrying along the crop.

9. A maize chopper according to claim 8, characterized in that the construction is such that, seen in the direction of movement of the crop, the wings (21) of the chain (18) are located near the upstream boundary edges of the recesses (17) in the carrier wheel (14) at the part where the chain (18) is in engagement with the carrier wheel (14).

10. A maize chopper according to claim 8 or 9, characterized in that the construction is such that the ends of said wings (21) extend above and under the guide means (20, 22) extending along the chain (18).

11. A maize chopper according to any one of the preceding claims, chracterized in that said auxiliary cutting means (11, 12) are adjustable transversely to the intended direction of movement of the maize chopper.

12. A maize chopper according to claim 11, characterized in that said auxiliary cutting means (11, 12) are adjustable about an upwardly extending axis of rotation.

13. A maize chopper according to claim 11 or 12, characterized in that said auxiliary cutting means (11, 12) are jointly pivotable about the axis of rotation of the nearest main cutting means (7, 8).

14. An additional device for use with a maize chopper having main cutting means in order to produce a maize chopper according to any one of the preceding claims, the additional device having two co-operating cutting means, both of which are coupable to the main cutting means by a chain, a carrier wheel being provided above the auxiliary cutting means adapted for location closest to a cutting means of the maize chopper, the carrier wheel having fingers for driving engagement by the chain and recesses therebetween for receiving crop stalks.

## Patentansprüche

1. Maishäcksler, der mit einem Gestell (1-3), mit wenigstens zwei zusammenwirkenden Hauptschneideinrichtungen (7,8), die um sich nach oben erstreckende Drehachsen drehbar in dem Gestell angeordnet sind, sowie mit Zuführelementen (9,10) versehen ist, die oberhalb der Hauptschneideinrichtungen (7,8) angeordnet sind und sich in Funktion mit den Hauptschneideinrichtungen (7,8) drehen, wobei die Zuführelemente (9,10) mit Trägern zum Transport des Getreides in Richtung einer Häckselkammer (4) versehen sind, die einen Häckselmechanismus zum Häckseln des zugeführten Getreides enthält, wobei wenigstens eine Seite der Vorrichtung mit einer zusätzlichen Vorrichtung ausgestattet ist, die mit zwei weiteren zusammenwirkenden Zusatzschneideinrichtungen (11,12) versehen ist, von denen eine über eine Kette (18) mit der Hauptschneideinrichtung (7) verbunden ist, **dadurch gekennzeichnet**, daß
(a) ein Trägerrad (14) oberhalb der Zusatzschneideinrichtung (11) angeordnet ist, die sich am nächsten an den Hauptschneideinrichtungen (7,8) befindet, wobei das Trägerrad (14) Finger (16) und Vertiefungen (17) zwischen selbigen zur Aufnahme von Erntegutstengel aufweist;
(b) die Kette (18) mit Trägern (21) versehen ist; und
(c) die andere der Zusatzschneideinrichtungen (11,12) ebenfalls über die Kette (18) mit einer der Hauptschneideinrichtungen (7) verbunden ist, wobei die Anordnung so ist, daß die Kette (18) mit den Fingern (16) in Eingriff ist und so das Trägerrad (14) antreibt, durch die Zusatzschneideinrichtungen (11,12) in Funktion geschnittenes Erntegut von der Kette (18) an der Rückseite des Trägerrades (14) entlangtransportiert und in den Zwischenraum zwischen den Zuführelementen (9,10), die sich oberhalb der Hauptschneideinrichtungen (7,8) befinden, eingeleitet wird, so daß es dem Häckselmechanismus (4) zugeführt wird.

2. Maishäcksler nach Anspruch 1, **dadurch gekennzeichnet**, daß das Trägerrad (14) mit zwei beabstandeten, übereinander angeordneten, plattenförmigen Teilen versehen ist, die vorstehende Finger (16) und zwischen den Fingern (17) befindliche Vertiefungen umfassen.

3. Maishäcksler nach Anspruch 1 oder 2, **dadurch gekennzeichnet**, daß eine Abstreicheinrichtung (22) in der Nähe der Stelle vorhanden ist, an der sich die Kette (18) in Funktion in einer Richtung entfernt von dem Trägerrad (14) bewegt.

4. Maishäcksler nach Anspruch 2 und 3, **dadurch gekennzeichnet**, daß ein Ende der Abstreicheinrichtung (22) zwischen den plattenförmigen Teilen (16) des Trägerrades (14) angeordnet ist.

5. Maishäcksler nach Anspruch 3 oder 4, **dadurch gekennzeichnet**, daß die Abstreicheinrichtung durch das Ende einer Führungseinrichtung (22) gebildet wird, die zwischen den plattenförmigen Teilen (16) angeordnet ist, wobei sich die Führungseinrichtung (22) wenigstens im wesentlichen parallel zu der Kette (18) erstreckt.

6. Maishäcksler nach Anspruch 5, **dadurch gekennzeichnet**, daß sich das Ende der Führungseinrichtung (22), das von dem Trägerrad (14) entfernt ist, an einem Teil des Umfangs eines Zuführelementes (9) entlang erstreckt, das oberhalb einer Hauptschneideinrichtung (7) angeordnet ist.

7. Maishäcksler nach einem der vorangehenden Ansprüche, **dadurch gekennzeichnet**, daß eine Führungseinrichtung (20) für die Kette (18) in der Nähe des Trägerrades (14) an der Seite der Kette (18), die von dem Trägerrad (14) entfernt ist, vorhanden ist, so daß die Kette (18) mit dem Trägerrad (14) in Eingriff gehalten wird.

8. Maishäcksler nach einem der vorangehenden Ansprüche, **dadurch gekennzeichnet**, daß die Kette (18) mit vorstehenden Flügeln (21) versehen ist, die das Erntegut tragen.

9. Maishäcksler nach Anspruch 8, **dadurch gekennzeichnet**, daß der Aufbau so ist, daß, in der Bewegungsrichtung des Erntegutes gesehen, die Flügel (21) der Kette (18) in der Nähe der oberen Begrenzungskanten der Vertiefungen (17) in dem Trägerrad (14) an dem Teil angeordnet sind, an dem die Kette (18) mit dem Trägerrad (14) in Eingriff ist.

10. Maishäcksler nach Anspruch 8 oder 9, **dadurch gekennzeichnet**, daß der Aufbau so ist, daß sich die Enden der Flügel (21) oberhalb und unterhalb der Führungseinrichtungen (20,22) erstrecken, die sich an der Kette (18) entlang erstrecken.

11. Maishäcksler nach einem der vorangehenden Ansprüche, **dadurch gekennzeichnet**, daß die Zusatzschneideinrichtungen (11,12) quer auf die beabsichtigte Bewegungsrichtung des Maishäckslers eingestellt werden können.

12. Maishäcksler nach Anspruch 11, **dadurch gekennzeichnet**, daß die Zusatzschneideinrichtungen (11,12) um eine sich nach oben erstreckende Drehachse herum eingestellt werden können.

13. Maishäcksler nach Anspruch 11 oder 12, **dadurch gekennzeichnet**, daß die Zusatzschneideinrichtungen (11,12) zusammen um die Drehachse der nächstgelegenen Hauptschneideinrichtung (7,8) geschwenkt werden können.

14. Zusätzliche Vorrichtung zum Einsatz bei einem Maishäcksler mit Hauptschneideinrichtungen, um einen Maishäcksler gemäß einem der vorangehenden Ansprüche herzustellen, wobei die zusätzliche Vorrichtung zwei zusammenwirkende Schneideinrichtungen aufweist, die beide durch eine Kette mit den Hauptschneideinrichtungen verbunden werden können, wobei ein Trägerrad oberhalb der Zusatzschneideinrichtungen vorhanden ist, das am nächsten an einer Schneideinrichtung für den Maishäcksler angeordnet wird, wobei das Trägerrad Finger aufweist, die mit der Kette in Antriebseingriff kommen, und Vertiefungen zwischen selbigen zur Aufnahme von Erntegutstengel.

## Revendications

1. Appareil pour le hachage du maïs, comportant un cadre (1 - 3), avec au moins deux organes de coupe principaux coopérants (7, 8), qui sont montés en rotation dans le cadre autour d'axes de rotation s'étendant vers le haut, et comportant des éléments d'alimentation (9, 10) disposés au-dessus des organes de coupe principaux (7, 8) et en rotation ensemble avec lesdits organes de coupe principaux (7, 8) pendant le fonctionnement, lesdits organes éléments d'alimentation (9, 10) étant dotés d'éléments de transport pour transporter la récolte en direction d'une chambre de hachage (4) qui contient un mécanisme de hachage pour hacher la récolte admise, dans lequel un côté au moyen de l'appareil est équipé d'un appareil additionnel qui est doté de deux organes de coupe auxiliaire additionnels coopérants (11, 12), dont l'un est accouplé à l'un des organes de coupe principaux (7) par une chaîne (18), caractérisé en ce que :
**(a)** une roue de transport (14) est prévue au-dessus de l'organe de coupe auxiliaire (11) situé le plus près des organes de coupe principaux (7, 8), la roue de transport (14) comportant des doigts (16) et des évidements (17) entre ceux-ci pour recevoir les tiges de récolte ;
**(b)** la chaîne (18) est équipée d'éléments de transport (21) ; et
**(c)** l'autre des organes de coupe auxiliaires (11 12) est également accouplé à l'un des organes de coupe principaux (7) par la chaîne (18), l'agencement étant tel que la chaîne (18) engage les doigts (16) et entraîne grâce à ceci la roue de transport (14), la récolte coupée par les organes de coupe auxiliaires (11, 12) pendant le fonctionnement étant transportée par la chaîne (18) le long du côté arrière de la roue de transport (14) et introduite dans l'espace entre les organes de transport (9, 10) situés au-dessus des organes de coupe principaux (7, 8), de manière à être alimentée vers le mécanisme de hachage (4).

2. Appareil de hachage pour le maïs selon la revendication 1, caractérisé en ce que la roue de transport (14) est pourvue de deux parties écartées et superposées en forme de plaques, qui comprennent des doigts en saillie (16) et des évidements situés entre lesdits doigts (17).

3. Appareil de hachage pour le maïs selon l'une ou l'autre des revendications 1 ou 2, caractérisé en ce que des organes de raclage (22) sont prévus au voisinage de l'emplacement où la chaîne (18) se déplace, pendant le fonctionnement, dans une direction éloignée de la roue de transport (14).

4. Appareil de hachage pour le maïs selon l'une et l'autre des revendications 2 ou 3, caractérisé en ce qu'une extrémité des organes de raclage (22) est située entre les parties (16) en forme de plaque de la roue de transport (14).

5. Appareil de hachage pour le maïs selon l'une ou l'autre des revendications 3 ou 4, caractérisé en ce que lesdits organes de raclage sont formés à l'extrémité d'un élément de guidage (22) situé entre les parties (16) en forme de plaque, ledit élément de guidage (22) s'étendant au moins sensiblement parallèlement à la chaîne (18).

6. Appareil de hachage pour le maïs selon la revendication 5, caractérisé en ce que l'extrémité de l'élément de guidage (22) éloignée de la roue de transport (14) s'étend le long d'une partie de la circonférence d'un élément d'alimentation (9) situé au-dessus de l'un des organes de coupe principaux (7).

7. Appareil de hachage pour le maïs selon l'une quelconque des revendications précédentes, caractérisé en ce que des organes de guidage (20) pour la chaîne (18) sont prévus au voisinage de la roue de transport (14), du côté de la chaîne (18) éloigné de ladite roue de transport (14), de façon à maintenir la chaîne (18) engagée avec la roue de transport (14).

8. Appareil de hachage pour le maïs selon l'une quelconque des revendications précédentes, caractérisé en ce que ladite chaîne (18) est équipée d'ailettes en saillie (21) pour transporter la récolte.

9. Appareil de hachage pour le maïs selon la revendication 8, caractérisé en ce que la construction est telle, vue dans la direction du déplacement de la récolte, que les ailettes (21) de la chaîne (18) sont situées au voisinage des bords limite amont des évidements (17) de la roue de transport (14) au niveau de la partie où la chaîne (18) est en engagement avec la roue de transport (14).

10. Appareil de hachage pour le maïs selon l'une ou l'autre des revendications 8 et 9, caractérisé en ce que la construction est telle que les extrémités desdites ailettes (21) s'étendent au-dessus et au-dessous des organes de guidage (20, 22) s'étendant le long de la chaîne (18).

11. Appareil de hachage pour le maïs selon l'une quelconque des revendications précédentes, caractérisé en ce que lesdits organes de coupe auxiliaires (11, 12) sont réglables transversalement à la direction de déplacement prévue pour l'appareil de hachage.

12. Appareil de hachage pour le maïs selon la revendication 11, caractérisé en ce que lesdits organes de coupe auxiliaires (11, 12) sont réglables autour d'un axe de rotation qui s'étend vers le haut.

13. Appareil de hachage pour le maïs selon l'une ou l'autre des revendications 11 ou 12, caractérisé en ce que lesdits organes de coupe auxiliaires (11, 12) sont capables de pivoter conjointement autour de l'axe de rotation de l'organe de coupe principal le plus proche (7, 8).

14. Appareil additionnel destiné à être utilisé avec un appareil de hachage pour le maïs qui possède des organes de coupe principaux afin de produire un appareil de hachage de maïs selon l'une quelconque des revendications précédentes, l'appareil additionnel comportant deux organes de coupe coopérants, qui peuvent être tous deux accouplés au organes de coupe principaux au moyen d'une chaîne, une roue de transport étant prévue au-dessus de l'organe de coupe auxiliaire qui est adapté à être situé au plus près d'un organe de coupe de l'appareil de hachage pour le maïs, la roue de transport possédant des doigts destinés à être engagés en entraînement par la chaîne, et des évidements entre lesdits doigts afin de recevoir des tiges de récolte.
